# EUROPÄISCHE PATENTSCHRIFT

(11) **EP 3 805 134 B1**
(45) Veröffentlichungstag und Bekanntmachung des Hinweises auf die Patenterteilung: **04.10.2023**
(21) Anmeldenummer: 20193113.6
(22) Anmeldetag: 27.08.2020
(51) Int. Cl.: B65G 47/68, B65B 7/16, B65G 21/20, B29C 65/78, B29C 65/00, B29L 31/00, B65B 35/40, B65B 35/54, B65B 35/56

(54) **SCHALENVERSCHLIESSMASCHINE MIT ZWEISPURIGER FÖRDERANORDNUNG UND FÖRDERVERFAHREN**
FORMWORK CLOSING MACHINE WITH TWO-TRACK CONVEYING ASSEMBLY AND CONVEYING METHOD
MACHINE DE SCELLAGE DES BARQUETTES POURVUE D'AGENCEMENT DE TRANSPORT À DEUX VOIES ET PROCÉDÉ DE TRANSPORT

(30) Priorität: 09.10.2019 DE 102019215451
(43) Veröffentlichungstag der Anmeldung: 14.04.2021
(73) Patentinhaber: MULTIVAC Sepp Haggenmüller SE & Co. KG, 87787 Wolfertschwenden (DE)
(72) Erfinder: BEHR, Markus, 87488 Betzigau (DE)
(74) Vertreter: Grünecker Patent- und Rechtsanwälte PartG mbB

(56) Entgegenhaltungen:
- WO-A1-2011/018391
- DE-A1-102011 108 919
- JP-A- H0 464 521
- JP-A- H0 867 334
- JP-A- 2015 054 766
- US-A- 3 144 119

## Beschreibung

Die Erfindung bezieht sich auf eine Schalenverschließmaschine mit einer Förderanordnung zum Fördern von Verpackungsschalen gemäß dem Oberbegriff von Anspruch 1 und auf ein Verfahren zum Fördern von Verpackungsschalen mittels einer Förderanordnung einer Schalenverschließmaschine gemäß dem Oberbegriff von Anspruch 9.

Aus der DE 10 2011 108 919 A1 sind eine Schalenverschließmaschine nach dem Oberbegriff des Anspruchs 1 und ein Verfahren zum Fördern von Verpackungsschalen nach dem Oberbegriff des Anspruchs 8 bekannt. Insbesondere, ist eine als Schalenverschließmaschine ausgebildete Verpackungsmaschine bekannt, bei der mit Produkten befüllte Verpackungsschalen entlang einer Förderrichtung mittels zweier parallel zueinander laufender Zuführbänder zweispurig einer Siegelstation zugeführt werden. In der Siegelstation werden die Verpackungsschalen mit einer Deckelfolie verschlossen. Anschließend werden die verschlossenen Verpackungsschalen wiederum zweispurig mittels zweier parallel zueinander laufender Abführbänder entlang der Förderrichtung weitergefördert. Zwischen den parallel laufenden Zuführbändern, zwischen den den beiden Verpackungslinien zugeordneten Bereichen der Siegelstation und zwischen den parallel laufenden Abführbändern (in einem Anfangsbereich der Abführbänder) ist eine Mittenführung vorgesehen. Zum Umsetzen der Verpackungsschalen von den Zuführbändern in die Siegelstation und zum Umsetzen der verschlossenen Verpackungsschalen aus der Siegelstation auf die Abführbänder ist ein Greifersystem vorgesehen. Dieses umfasst für jede der beiden Verpackungslinien einen Greifer, der von seitlich außen auf die Verpackungsschalen zubewegt wird und diese gegen die Mittenführung drückt. Anschließend werden die Greifer entlang der Förderrichtung verfahren, wodurch die zwischen dem jeweiligen Greifer und der Mittenführung gehaltenen Verpackungsschalen mitgenommen werden.

Aufgrund der im Anfangsbereich der Abführbänder zwischen den Abführbändern vorliegenden Mittenführung liegt auch der Mittenführung bezüglich der Förderrichtung nachgeordnet ein Spalt zwischen den beiden Abführbändern vor. Dies kann die Möglichkeiten für weitere Bearbeitungsschritte auf den Abführbändern einschränken. Beispielsweise ist ein Vereinigen der beiden Linien von Verpackungsschalen erschwert, insbesondere wenn die vereinigte Verpackungslinie mittig laufen soll.

Es ist Aufgabe der Erfindung, das Weiterverarbeiten von Verpackungsschalen, welche auf seitlich nebeneinander verlaufenden und zumindest bereichsweise durch eine Mittenführung getrennten Fördereinrichtungen einer Schalenverschließmaschine gefördert werden, mit möglichst geringem Aufwand zu vereinfachen.

Diese Aufgabe wird durch eine Schalenverschließmaschine gemäß Anspruch 1 sowie durch ein Verfahren gemäß Anspruch 8 gelöst. Die abhängigen Ansprüche geben vorteilhafte Ausführungsformen der Erfindung an.

Gemäß einem Aspekt betrifft die Erfindung eine Schalenverschließmaschine mit einer Förderanordnung zum Fördern von Verpackungsschalen entlang einer Förderrichtung. Die Förderanordnung umfasst eine erste Fördereinrichtung zum Fördern einer ersten Linie von Verpackungsschalen entlang der Förderrichtung und eine bezüglich der Förderrichtung seitlich neben der ersten Fördereinrichtung verlaufende zweite Fördereinrichtung zum Fördern einer zweiten Linie von Verpackungsschalen entlang der Förderrichtung. Zudem umfasst die Förderanordnung eine zwischen der ersten Fördereinrichtung und der zweiten Fördereinrichtung angeordnete Mittenführung. Die Mittenführung verläuft entlang der Förderrichtung. Die Förderanordnung umfasst zudem eine dritte Fördereinrichtung zum Fördern von Verpackungsschalen entlang der Förderrichtung. Die dritte Fördereinrichtung erstreckt sich bezüglich der Förderrichtung an die zweite Fördereinrichtung anschließend seitlich neben der ersten Fördereinrichtung.

Erfindungsgemäß erstrecken sich seitlich neben der ersten Fördereinrichtung zwei aneinander anschließende Fördereinrichtungen, nämlich die zweite Fördereinrichtung und die dritte Fördereinrichtung. Dadurch, dass die zweite Fördereinrichtung und die dritte Fördereinrichtung als separate Fördereinrichtungen ausgebildet sind, lassen sich diese unterschiedlich gestalten und an die Erfordernisse an der jeweiligen Position anpassen. Hierdurch werden die Möglichkeiten zur Verarbeitung der Verpackungsschalen erweitert.

Die erste Fördereinrichtung, die zweite Fördereinrichtung und die dritte Fördereinrichtung können parallel zueinander verlaufen. Die erste Fördereinrichtung, die zweite Fördereinrichtung und die dritte Fördereinrichtung können parallel zu der Förderrichtung verlaufen.

Die erste Fördereinrichtung, die zweite Fördereinrichtung und die dritte Fördereinrichtung können jeweils in Form eines Förderbandes ausgebildet sein. Die entsprechenden Förderbänder können jeweils ein Obertrum zum Aufnehmen der Verpackungsschalen aufweisen. Vorzugsweise werden die erste Fördereinrichtung, die zweite Fördereinrichtung und die dritte Fördereinrichtung jeweils von nicht mehr als einem Antrieb angetrieben.

Die dritte Fördereinrichtung reicht seitlich näher an die erste Fördereinrichtung heran als die zweite Fördereinrichtung. Hierdurch kann im Bereich der dritten Fördereinrichtung ein Spalt auf die erste Fördereinrichtung hin verringert werden. Dies vereinfacht beispielsweise ein Verschieben der Verpackungsschalen über die Grenzen der nebeneinander laufenden Fördereinrichtungen hinweg.

Die dritte Fördereinrichtung weist vorzugsweise eine größere Breite (in eine horizontale Seitenrichtung senkrecht zur Förderrichtung) auf, als die zweite Fördereinrichtung. Hierdurch lässt sich vorhandener Platz ausnutzen und die zur Verfügung stehende Förderfläche vergrößern. Eine von der ersten Fördereinrichtung weggewandte seitliche Endkante einer Förderfläche der zweiten Fördereinrichtung kann zumindest im Wesentlichen kollinear sein mit einer von der ersten Fördereinrichtung weggewandten seitlichen Endkante einer Förderfläche der dritten Fördereinrichtung. Eine der ersten Fördereinrichtung zugewandte seitliche Endkante der Förderfläche der dritten Fördereinrichtung kann näher an die erste Fördereinrichtung heranragen als eine der ersten Fördereinrichtung zugewandte seitliche Endkante der Förderfläche der zweiten Fördereinrichtung.

Die dritte Fördereinrichtung kann sich bezüglich der Förderrichtung an die Mittenführung anschließen. Die zweite Fördereinrichtung kann an die Platzverhältnisse im Bereich der Mittenführung angepasst sein. Die dritte Fördereinrichtung kann an die Platzverhältnisse im Anschluss an die Mittenführung angepasst sein.

Die Förderanordnung kann eine erste Antriebsanordnung umfassen, welche dazu konfiguriert ist, die erste Fördereinrichtung und die dritte Fördereinrichtung gemeinsam anzutreiben. Hierdurch wird sichergestellt, dass die erste Fördereinrichtung und die dritte Fördereinrichtung synchronisiert sind. Insbesondere kann auf einfache Art und Weise sichergestellt werden, dass die erste Fördereinrichtung und die dritte Fördereinrichtung mit einer gemeinsamen Fördergeschwindigkeit betrieben werden. Es wird auch sichergestellt, dass die Stand- und Laufzeiten der ersten Fördereinrichtung und der dritten Fördereinrichtung perfekt aufeinander abgestimmt sind. Wenn die erste Fördereinrichtung und die dritte Fördereinrichtung mit der gemeinsamen ersten Antriebsanordnung angetrieben werden, lässt sich gegenüber einem separaten Antreiben der ersten Fördereinrichtung und der dritten Fördereinrichtung eine Antriebsanordnung einsparen.

Die erste Antriebsanordnung kann beispielsweise eine erste Antriebswelle umfassen, die zum Antreiben der ersten Fördereinrichtung mit der ersten Fördereinrichtung in Kontakt ist und zum Antreiben der dritten Fördereinrichtung mit der dritten Fördereinrichtung in Kontakt ist. Durch Verwenden einer gemeinsamen Antriebswelle lässt sich eine einfache Bauform realisieren.

Die Förderanordnung kann eine zweite Antriebsanordnung umfassen, welche dazu konfiguriert ist, die zweite Fördereinrichtung getrennt von der ersten Fördereinrichtung und der dritten Fördereinrichtung anzutreiben. Da aufgrund des getrennten Antreibens der zweiten Fördereinrichtung die zeitliche Abfolge eines Antreibens der dritten Fördereinrichtung und eines Antreibens der zweiten Fördereinrichtung frei bestimmbar ist, lässt sich durch geeignetes Antreiben der Fördereinrichtungen eine Position auf der dritten Fördereinrichtung bestimmen, auf welche Verpackungsschalen von der zweiten Fördereinrichtung hin übergeben werden. Die zweite Antriebsanordnung kann eine zweite Antriebswelle umfassen, die zum Antreiben der zweiten Fördereinrichtung mit der zweiten Fördereinrichtung in Kontakt ist.

Die Schalenverschließmaschine kann eine Steuereinrichtung umfassen, welche dazu konfiguriert ist, die zweite Antriebsanordnung derart anzusteuern, dass die zweite Fördereinrichtung während eines Teils der Laufzeit der ersten Fördereinrichtung und der dritten Fördereinrichtung fördert, und während eines Teils der Laufzeit der ersten Fördereinrichtung und der dritten Fördereinrichtung stillsteht. Beispielsweise können die erste Fördereinrichtung und die dritte Fördereinrichtung während eines Stillstands der zweiten Fördereinrichtung so lange laufen, bis an einem bezüglich der Förderrichtung rückwärtigen Ende der dritten Fördereinrichtung eine Stelle erreicht ist, an welche eine auf der zweiten Fördereinrichtung vorliegende Verpackungsschale übergeben werden soll. Zu einem entsprechenden Zeitpunkt kann die zweite Fördereinrichtung angetrieben werden, um die Verpackungsschale an die dritte Fördereinrichtung zu übergeben. Die Übergabepositionen der Verpackungsschalen auf die dritte Fördereinrichtung lassen sich so geeignet steuern.

Die Schalenverschließmaschine kann einen Linienvereiniger aufweisen, welcher dazu konfiguriert ist, die erste Linie von Verpackungsschalen und die zweite Linie von Verpackungsschalen der Mittenführung bezüglich der Förderrichtung nachgeordnet zu einer gemeinsamen Linie von Verpackungsschalen zu vereinigen. Eine so vereinigte gemeinsame Linie von Verpackungsschalen lässt sich anschließend einspurig weiterverarbeiten.

Der Linienvereiniger kann die erste Linie von Verpackungsschalen und die zweite Linie von Verpackungsschalen zumindest im Wesentlichen mittig auf einer von der ersten Fördereinrichtung und der zweiten Fördereinrichtung gemeinsam gebildeten Förderfläche vereinigen. Eine solche mittige Vereinigung kann das Weiterverarbeiten der Verpackungsschalen durch nachgeordnete Stationen erleichtern.

Besonders vorteilhaft für Ausführungen mit einer Linienvereinigung ist es, wenn ein seitlicher Abstand zwischen einer Förderfläche der ersten Fördereinrichtung und einer Förderfläche der dritten Fördereinrichtung kleiner ist, als ein seitlicher Abstand zwischen der Förderfläche der ersten Fördereinrichtung und einer Förderfläche der zweiten Fördereinrichtung.

Ein Arbeitstakt einer Linienvereinigung kann beispielsweise so aussehen, dass die Steuereinrichtung zunächst die erste Antriebseinrichtung zum Antreiben der ersten Fördereinrichtung und der dritten Fördereinrichtung antreibt, so dass auf der ersten Fördereinrichtung vorliegende Verpackungsschalen entlang der Fördereinrichtung gefördert werden, während gleichzeitig die zweite Antriebsanordnung und damit die zweite Fördereinrichtung stillstehen. Wenn die Verpackungsschalen von der ersten Fördereinrichtung einen Anfang der dritten Fördereinrichtung bezüglich der Förderrichtung passiert haben, kann die Steuereinrichtung die zweite Antriebsanordnung zum Antreiben der zweiten Fördereinrichtung ansteuern. Es werden dann die Verpackungsschalen von der zweiten Fördereinrichtung an die dritte Fördereinrichtung übergeben. Hierbei können die erste Fördereinrichtung und die dritte Fördereinrichtung weiterlaufen. Die Verpackungsschalen von der ersten Fördereinrichtung und die Verpackungsschalen von der zweiten Fördereinrichtung werden nacheinander dem Linienvereiniger zugeführt.

Der Linienvereiniger kann dazu konfiguriert sein, eine seitliche Positionierung der Verpackungsschalen der ersten Linie von Verpackungsschalen und von Verpackungsschalen der zweiten Linie von Verpackungsschalen auf der von der ersten Fördereinrichtung und der dritten Fördereinrichtung gebildeten gemeinsamen Förderfläche zu modifizieren. Dies ist aber nicht zwingend erforderlich. Es wäre beispielsweise auch denkbar, dass der Linienvereiniger lediglich die Verpackungsschalen der ersten Linie von Verpackungsschalen oder alternativ lediglich die Verpackungsschalen der zweiten Linie von Verpackungsschalen umlenkt und die Verpackungsschalen der jeweils anderen Linie gerade weiterlaufen lässt.

Der Linienvereiniger kann eine erste Umlenkeinrichtung umfassen, die Verpackungsschalen der ersten Linie von Verpackungsschalen umlenkt oder bezüglich der Förderrichtung seitlich verschiebt. Der Linienvereiniger kann eine zweite Umlenkeinrichtung aufweisen, welche Verpackungsschalen der zweiten Linie von Verpackungsschalen umlenkt oder bezüglich der Förderrichtung seitlich verschiebt. Der Linienvereiniger kann die erste Umlenkeinrichtung und zugleich die zweite Umlenkeinrichtung umfassen. Alternativ könnte der Linienvereiniger entweder nur die erste Umlenkeinrichtung oder nur die zweite Umlenkeinrichtung umfassen.

Die Förderanordnung kann bezüglich der Förderrichtung einer zum Versiegeln der Verpackungsschalen ausgebildeten Siegelstation der Schalenverschließmaschine nachgeordnet sein und zum Abtransport der versiegelten Verpackungsschalen ausgebildet sein. Die Mittenführung kann eine Anlagefläche bilden, mithilfe derer Greifer der Schalenverschließmaschine Verpackungsschalen aus der Siegelstation auf die erste Fördereinrichtung und die zweite Fördereinrichtung umsetzen können, insbesondere entlang der Förderrichtung umsetzen können.

Die Erfindung umfasst zudem ein Verfahren zum Fördern von Verpackungsschalen entlang einer Förderrichtung mittels einer Förderanordnung einer Schalenverschließmaschine. Die erfindungsgemäße Schalenverschließmaschine kann zum Durchführen des Verfahrens geeignet, ausgelegt und/oder konfiguriert sein. Im Hinblick auf die Schalenverschließmaschine beschriebene Merkmale lassen sich auf das Verfahren übertragen und umgekehrt.

Ein Verfahren zum Fördern von Verpackungsschalen entlang einer Förderrichtung mittels einer Förderanordnung einer Schalenverschließmaschine umfasst gemäß eines Aspekts der Erfindung das Fördern einer ersten Linie von Verpackungsschalen entlang der Förderrichtung mit einer ersten Fördereinrichtung. Das Verfahren umfasst zudem das Fördern einer zweiten Linie von Verpackungsschalen entlang der Förderrichtung mit einer zweiten Fördereinrichtung, welche seitlich neben der ersten Fördereinrichtung verläuft. Die zweite Fördereinrichtung ist durch eine zwischen der ersten Fördereinrichtung und der zweiten Fördereinrichtung entlang der Förderrichtung verlaufende Mittenführung von der ersten Fördereinrichtung getrennt. Das Verfahren umfasst das Antreiben einer dritten Fördereinrichtung, welche sich bezüglich der Förderrichtung an die zweite Fördereinrichtung anschließt und sich seitlich neben der ersten Fördereinrichtung entlang der Förderrichtung erstreckt.

Das Verfahren kann das gemeinsame Antreiben der ersten Fördereinrichtung und der dritten Fördereinrichtung mit einer gemeinsamen ersten Antriebsanordnung umfassen.

Das Verfahren kann das Antreiben der zweiten Fördereinrichtung getrennt von der ersten Fördereinrichtung und der dritten Fördereinrichtung mit einer zweiten Antriebsanordnung umfassen.

Die zweite Antriebsanordnung kann während eines Teils einer Laufzeit der ersten Fördereinrichtung und der dritten Fördereinrichtung zum Antreiben der zweiten Fördereinrichtung betrieben werden und während eines Teils der Laufzeit der ersten Fördereinrichtung und der dritten Fördereinrichtung stillstehen.

Das Verfahren kann zudem das Vereinigen der ersten Linie von Verpackungsschalen und der zweiten Linie von Verpackungsschalen umfassen, insbesondere mit einem Linienvereiniger.

Das Vereinigen der ersten Linie von Verpackungsschalen und der zweiten Linie von Verpackungsschalen kann bezüglich der Förderrichtung der Mittenführung nachgeordnet stattfinden.

Zum Vereinigen der ersten Linie von Verpackungsschalen und der zweiten Linie von Verpackungsschalen können Verpackungsschalen der ersten Linie von Verpackungsschalen und/oder Verpackungsschalen der zweiten Linie von Verpackungsschalen in eine Richtung senkrecht zu der Förderrichtung verschoben werden. Dies kann beispielsweise durch eine oder mehrere statische Umlenkeinrichtungen erfolgen. Alternativ könnten die Verpackungen auch durch bewegliche Umlenkeinrichtungen verschoben werden, wie beispielsweise durch einen Pusher.

Die Verpackungsschalen können nach dem Vereinigen der ersten Linie von Verpackungsschalen und der zweiten Linie von Verpackungsschalen zumindest im Wesentlichen mittig auf einer von der ersten Fördereinrichtung der dritten Fördereinrichtung gebildeten Förderfläche gefördert werden.

Das Verfahren kann auch das Verschließen der Verpackungsschalen in einer Siegelstation der Schalenverschließmaschine umfassen. Die Verpackungsschalen können insbesondere durch Ansiegeln einer Deckelfolie in der Siegelstation verschlossen werden.

Nachfolgend soll die Erfindung anhand einer Ausführungsform unter Bezugnahme auf die Figuren weiter erläutert werden. Es zeigt
- Fig. 1: eine schematische ausschnittsweise Perspektivansicht einer Schalenverschließmaschine gemäß einer Ausführungsform;
- Fig. 2: eine schematische Draufsicht auf die Förderanordnung der Schalenverschließmaschine gemäß der Ausführungsform, wobei jeweils das Obertrum der Fördereinrichtungen weggelassen wurde, um darunterliegende Komponenten darzustellen; und
- Fig. 3: eine schematische Darstellung einer Abfolge von Betriebszuständen der Förderanordnung der Schalenverschließmaschine gemäß der Ausführungsform in einer Anwendung zur Linienvereinigung.

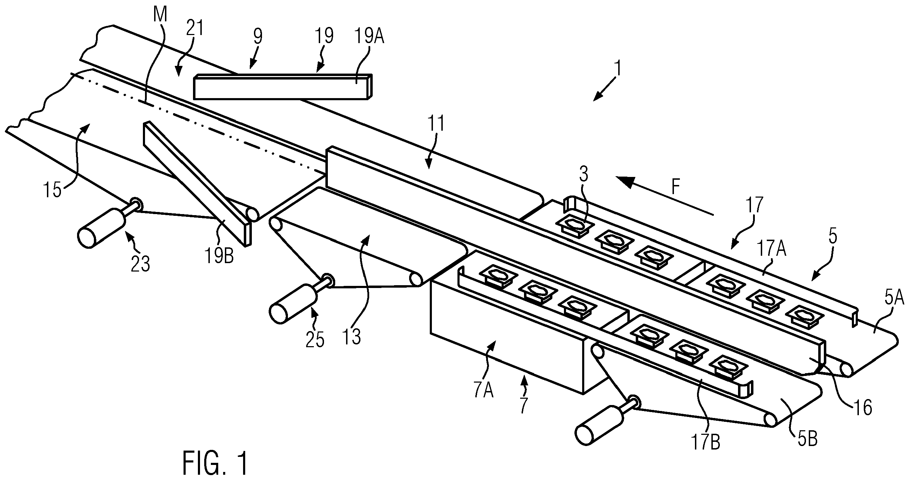

Fig. 1 zeigt in schematischer Teilansicht eine Schalenverschließmaschine 1 zum Verschließen von Verpackungsschalen 3 gemäß einer Ausführungsform. Die Schalenverschließmaschine 1 kann zwei Linien von Verpackungsschalen 3 gleichzeitig verarbeiten, ist also zweispurig. Entlang einer Förderrichtung F sind hintereinander eine Zuführeinrichtung 5, eine Siegelstation 7 und eine als Abführeinrichtung ausgebildete Förderanordnung 9 vorgesehen. Die Zuführeinrichtung 5 umfasst zwei nebeneinander parallel zu der Förderrichtung F verlaufende und in Förderrichtung F fördernde Zuführbänder 5A, 5B zum Zuführen von zu verschließenden Verpackungsschalen 3 zu der Siegelstation 7. Eine erste Linie von Verpackungsschalen 3 wird auf dem ersten Zuführband 5A zugeführt und eine zweite Linie von Verpackungsschalen 3 wird auf dem zweiten Zuführband 5B zugeführt. Die Siegelstation 7 kann gleichzeitig Verpackungsschalen 3 der ersten Linie von Verpackungsschalen 3 und Verpackungsschalen 3 der zweiten Linie von Verpackungsschalen 3 verarbeiten. Die Siegelstation 7 umfasst ein Siegelwerkzeugunterteil 7A, welches in der dargestellten Ausführungsform zweiteilig ausgebildet ist (ein Teil für die erste Linie von Verpackungsschalen 3 und ein Teil für die zweite Linie von Verpackungsschalen 3). Die Siegelstation 7 umfasst zudem ein der Übersichtlichkeit halber nicht dargestelltes Siegelwerkzeugoberteil, welches oberhalb des Siegelwerkzeugunterteils 7A angeordnet ist und zum Verschließen der Verpackungsschalen 3 durch Ansiegeln einer Oberfolie mit dem Siegelwerkzeugunterteil 7A zusammenwirkt.

Der Siegelstation 7 bezüglich der Förderrichtung F nachgeordnet ist die Förderanordnung 9 vorgesehen, um die verschlossenen Verpackungsschalen 3 weiter entlang der Förderrichtung F von der Siegelstation 7 weg zu transportieren. Die Förderanordnung 9 umfasst eine erste Fördereinrichtung 11, eine zweite Fördereinrichtung 13 und eine dritte Fördereinrichtung 15, welche jeweils als entlang der Förderrichtung F förderndes Förderband ausgebildet sind. Die erste Fördereinrichtung 11 schließt sich, gewissermaßen als Fortsetzung des ersten Zuführbands 5A, an die Siegelstation 7 an. Die zweite Fördereinrichtung 13 schließt sich, gewissermaßen als Fortsetzung des zweiten Zuführbands 5B, an die Siegelstation 7 an. Die zweite Fördereinrichtung 13 verläuft parallel zu der ersten Fördereinrichtung 11 und seitlich neben der ersten Fördereinrichtung 11. Die dritte Fördereinrichtung 15 verläuft parallel zur ersten Fördereinrichtung 11 und seitlich neben der ersten Fördereinrichtung 11. Die dritte Fördereinrichtung 15 ist bezüglich der Förderrichtung F der zweiten Fördereinrichtung 13 nachgeordnet.

Zwischen dem ersten Zuführband 5A und dem zweiten Zuführband 5B, zwischen dem ersten Teil des Siegelwerkzeugunterteils 7A und dem zweiten Teil des Siegelwerkzeugunterteils 7A und zwischen der ersten Fördereinrichtung 11 und der zweiten Fördereinrichtung 13 der Förderanordnung 9 erstreckt sich eine Mittenführung 16 entlang der Förderrichtung F.

Zum Umsetzen der zu verschließenden Verpackungsschalen 3 von der Zuführeinrichtung 5 in die Siegelstation 7 und zum Umsetzen der verschlossenen Verpackungsschalen 3 aus der Siegelstation 7 auf die Förderanordnung 9 ist ein Greifersystem 17 vorgesehen. Das Greifersystem 17 umfasst einen ersten Greifer 17A, welcher auf der Seite der Mittenführung 16 vorgesehen ist, auf welcher sich das erste Zuführband 5A und die erste Fördereinrichtung 11 der Förderanordnung 9 befinden. Der zweite Greifer 17B befindet sich auf der anderen Seite der Mittenführung 16, auf welcher sich auch das zweite Zuführband 5B und die zweite Fördereinrichtung 13 der Förderanordnung 9 befinden. Nach Beendigung eines Siegelvorgangs in der Siegelstation 7 bewegen sich der erste Greifer 17A und der zweite Greifer 17B senkrecht zu der Förderrichtung F seitlich nach innen auf die Mittenführung 16 zu. Dabei kommen die Greifer 17A, 17B mit auf der Zuführeinrichtung 5 befindlichen zu verschließenden Verpackungsschalen 3 und mit in der in der Siegelstation 7 befindlichen verschlossenen Verpackungsschalen 3 in Kontakt und schieben diese gegen die Mittenführung 16. Anschließend werden die Greifer 17A, 17B entlang der Förderrichtung F bewegt. Hierbei werden die zwischen dem jeweiligen Greifer 17A, 17B und der Mittenführung 16 gehaltenen Verpackungsschalen 3 mitgenommen. Nach der Bewegung der Greifer 17A, 17B in Förderrichtung F befinden sich die zu verschließenden Verpackungsschalen 3, die zuvor auf der Zuführeinrichtung 5 vorgelegen sind, in der Siegelstation 7. Die zuvor in der Siegelstation 7 vorgelegenen verschlossenen Verpackungsschalen 3 befinden sich nach dem Bewegen der Greifer 17A, 17B auf der ersten Fördereinrichtung 11 bzw. der zweiten Fördereinrichtung 13 der Förderanordnung 9. Für einen verbesserten Eingriff der Greifer 17A, 17B mit den Verpackungsschalen 3 können die Greifer 17A, 17B nicht dargestellte Eingriffselemente aufweisen. Nach dem Umsetzen von verschlossenen Schalen 3 aus der Siegelstation 7 auf die Förderanordnung 9 liegt eine erste Linie von Verpackungsschalen 3 auf der ersten Fördereinrichtung 11 vor und liegt eine zweite Linie von Verpackungsschalen 3 auf der zweiten Fördereinrichtung 13 vor.

Um ein Weiterverarbeiten der Verpackungsschalen 3 zu erleichtern, ist die dritte Fördereinrichtung 15 nach innen hin in Richtung auf die erste Fördereinrichtung 11 breiter als die zweite Fördereinrichtung 13. Hierdurch reicht die dritte Fördereinrichtung 15 näher als die zweite Fördereinrichtung 13 an die erste Fördereinrichtung 11 heran. Die dritte Fördereinrichtung 15 schließt sich der Mittenführung 16 nachgeordnet an die zweite Fördereinrichtung 13 an und überbrückt gewissermaßen den Spalt, der bei einem einfachen Fortführen der zweiten Fördereinrichtung 13 zwischen den seitlich nebeneinander laufenden Fördereinrichtungen entstehen würde. Hierdurch wird beispielsweise das Weiterverarbeiten der Verpackungsschalen 3 im Bereich nach der Mittenführung 16 erleichtert.

In der dargestellten Ausführungsform sollen die erste Linie von Verpackungsschalen 3 und die zweite Linie von Verpackungsschalen 3 nach der Mittenführung 16 zu einer gemeinsamen Linie von Verpackungsschalen 3 vereinigt werden. Hierzu ist ein Linienvereiniger 19 vorgesehen, welcher eine erste Umlenkeinrichtung 19A und eine zweite Umlenkeinrichtung 19B umfasst. Die erste Umlenkeinrichtung ist im Wesentlichen oberhalb der ersten Fördereinrichtung 11 vorgesehen und dazu konfiguriert, auf der ersten Fördereinrichtung 11 geförderte Verpackungsschalen 3 in Richtung auf eine Mitte M der von der ersten Fördereinrichtung 11 und der dritten Fördereinrichtung 15 gebildeten gemeinsamen Förderfläche 21 hin umzulenken. Zusätzlich zu der Bewegung entlang der Förderrichtung F aufgrund des Förderns durch die erste Fördereinrichtung 11 werden die Verpackungsschalen 3 der ersten Linie von Verpackungsschalen 3 also mittels der ersten Umlenkeinrichtung 19A auch senkrecht zu der Förderrichtung F verschoben. Die zweite Umlenkeinrichtung 19B ist zumindest teilweise oberhalb der dritten Fördereinrichtung 15 vorgesehen. Die zweite Umlenkeinrichtung 19B ist dazu konfiguriert, Verpackungsschalen 3 der zweiten Linie von Verpackungsschalen 3 in Richtung auf die Mitte M der von der ersten Fördereinrichtung 11 und der dritten Fördereinrichtung 15 gebildeten gemeinsamen Förderfläche 21 hin abzulenken. Zusätzlich zu der Bewegung entlang der Förderrichtung F durch das Fördern mittels der dritten Fördereinrichtung 15 werden die Verpackungsschalen 3 der zweiten Linie von Verpackungsschalen 3 also durch die zweite Umlenkeinrichtung 19B auch in einer Richtung senkrecht zu der Förderrichtung F verschoben.

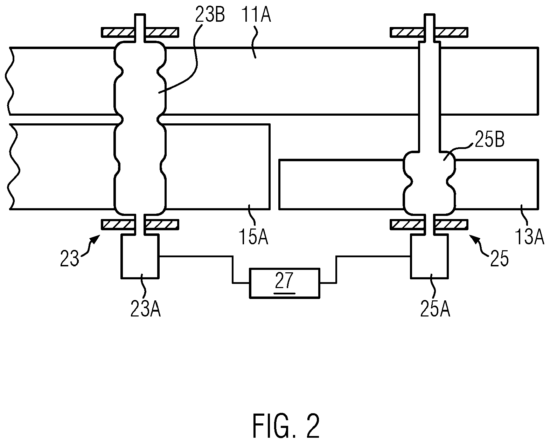

In der gezeigten Ausführungsform werden die erste Fördereinrichtung 11 und die dritte Fördereinrichtung 15 gemeinsam mittels einer ersten Antriebsanordnung 23 angetrieben. Die zweite Fördereinrichtung 13 wird getrennt von der ersten Fördereinrichtung 11 und der dritten Fördereinrichtung 15 von einer zweiten Antriebsanordnung 25 angetrieben. Diese Situation ist in Fig. 2 dargestellt, welche eine Draufsicht auf die Förderanordnung 9 zeigt, in welcher jeweils das Obertrum der Fördereinrichtungen 11, 13, 15 weggelassen wurde, um Einsicht in die Antriebskonfiguration der Fördereinrichtungen 11, 13, 15 zu erhalten. Die erste Antriebsanordnung 23 umfasst einen ersten Antriebsmotor 23A und eine erste Antriebswelle 23B, welche von dem ersten Antriebsmotor 23A zur Rotation angetrieben wird. Die erste Antriebswelle 23B erstreckt sich senkrecht zur Förderrichtung F. Ein erster Bandgurt 11A der ersten Fördereinrichtung 11 läuft über die erste Antriebswelle 23B und wird von dieser angetrieben. Parallel hierzu läuft ein dritter Bandgurt 15A der dritten Fördereinrichtung 15 über die erste Antriebswelle 23B und wird ebenfalls von dieser angetrieben. Der erste Bandgurt 11A kann eine Förderfläche der ersten Fördereinrichtung 11 bereitstellen. Der dritte Bandgurt 15A kann eine Förderfläche der dritten Fördereinrichtung 15 bereitstellen.

Die zweite Antriebsanordnung 25 umfasst einen zweiten Antriebsmotor 25A und eine von diesem zur Rotation angetriebene zweite Antriebswelle 25B. Die zweite Antriebswelle 25B verläuft senkrecht zur Förderrichtung F. Ein zweiter Bandgurt 13A der zweiten Fördereinrichtung 13 läuft über die zweite Antriebswelle 25B und wird von dieser angetrieben. Der zweite Bandgurt 13A kann eine Förderfläche der zweiten Fördereinrichtung 13 bereitstellen. Der erste Bandgurt 11A der ersten Fördereinrichtung 11 kreuzt zwar die zweite Antriebswelle 25B, ist aber nicht mit der zweiten Antriebswelle 25b in Eingriff. Fig. 2 zeigt zudem eine Steuereinrichtung 27, die die erste Antriebseinrichtung 23 und die zweite Antriebseinrichtung 25 steuert.

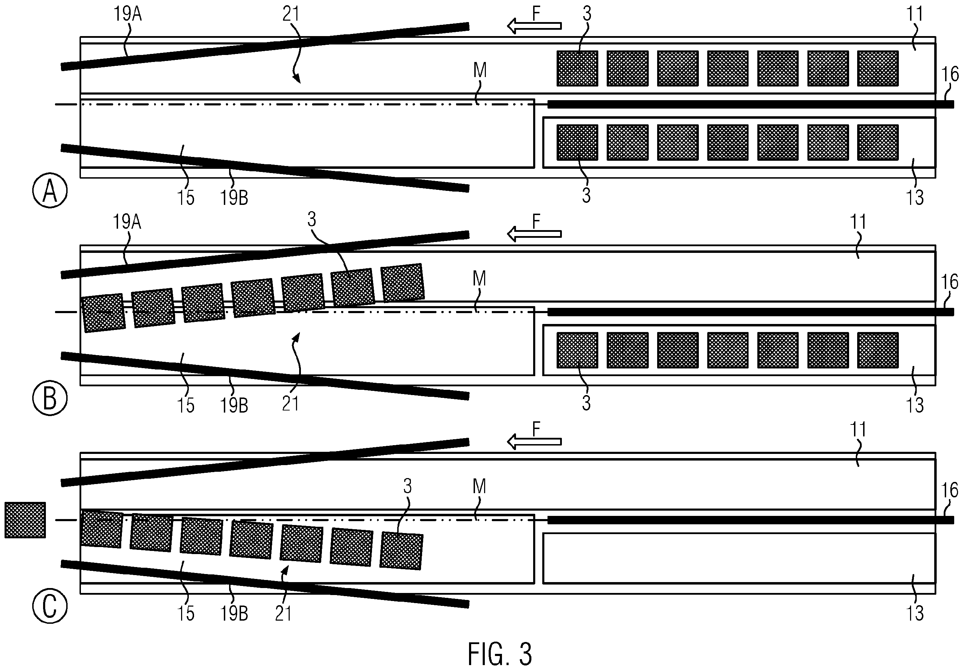

Fig. 3 zeigt in schematischer Draufsicht auf die Förderanordnung 9 eine zeitliche Abfolge von Betriebszuständen der Fördereinrichtung 9.

In Teil A von Fig. 3 ist die Situation dargestellt, nachdem verschlossene Verpackungsschalen 3 durch das Greifersystem 17 auf die erste Fördereinrichtung 11 und die zweite Fördereinrichtung 13 umgesetzt wurden. Es befindet sich eine erste Linie von Verpackungsschalen 3 auf der ersten Fördereinrichtung 11 und eine zweite Linie von Verpackungsschalen 3 auf der zweiten Fördereinrichtung 13. In diesem Betriebszustand können die erste Fördereinrichtung 11, die zweite Fördereinrichtung 13 und die dritte Fördereinrichtung 15 stillstehen.

Aus dem in Teil A von Fig. 3 gezeigten Zustand heraus steuert die Steuereinrichtung 27 die erste Antriebsanordnung 23 derart an, dass die erste Antriebsanordnung 23 die erste Fördereinrichtung 11 und die dritte Fördereinrichtung 15 zum Fördern entlang der Förderrichtung F antreibt. Hierdurch wird die auf der ersten Fördereinrichtung 11 vorliegende erste Linie von Verpackungsschalen 3 entlang der Förderrichtung F gefördert. Die erste Linie von Verpackungsschalen 3 kommt hierbei mit der ersten Umlenkeinrichtung 19A in Kontakt, wodurch die erste Linie von Verpackungsschalen 3 in Richtung auf eine Mittellinie M der durch die erste Fördereinrichtung 11 und die dritte Fördereinrichtung 15 gebildeten gemeinsamen Förderfläche 21 hin seitlich verschoben wird.

Nachdem die erste Linie von Verpackungsschalen 3 zumindest die Mittenführung 16 und den Anfang der dritten Fördereinrichtung 15 passiert hat, steuert die Steuereinrichtung 27 die zweite Antriebsanordnung 25 zum Antreiben der zweiten Fördereinrichtung 13 zum Fördern der zweiten Linie von Verpackungsschalen 3 in Förderrichtung F an. Die erste Fördereinrichtung 11 und die dritte Fördereinrichtung 15 werden hierbei weiterhin angetrieben. Wie in Teil C von Fig. 3 gezeigt, wird hierdurch die zweite Linie von Verpackungsschalen 3 von der zweiten Fördereinrichtung 13 auf die dritte Fördereinrichtung 15 weitergefördert. Die zweite Linie von Verpackungsschalen 3 kommt durch Weiterfördern auf der dritten Fördereinrichtung 15 in Kontakt mit der zweiten Umlenkeinrichtung 19B und wird hierdurch in eine Richtung senkrecht zur Förderrichtung F auf die Mittellinie M der durch die erste Fördereinrichtung 11 und die dritte Fördereinrichtung 15 gebildeten gemeinsamen Förderfläche 21 hin abgelenkt. Die zweite Linie von Verpackungsschalen 3 reiht sich auf der gemeinsamen Förderfläche 21 hinter der ersten Linie von Verpackungsschalen 3 ein, so dass eine gemeinsame Linie von Verpackungsschalen 3 gebildet wird.

Es wurde eine Ausführungsform beschrieben, bei der die Verpackungsschalen durch Durchführen einer Linienvereinigung weiterverarbeitet werden. Die Erfindung ist jedoch nicht hierauf beschränkt und kann auch für andere Formen der Weiterverarbeitung vorteilhaft eingesetzt werden.

In der beschriebenen Ausführungsform umfasst der Linienvereiniger 19 die erste Umlenkeinrichtung 19A und die zweite Umlenkeinrichtung 19B. Es wäre aber auch denkbar, dass lediglich entweder die erste Umlenkeinrichtung 19A oder die zweite Umlenkeinrichtung 19B, nicht aber beide, vorgesehen sind. Dies kann insbesondere vorteilhaft sein, wenn die Linienvereinigung nicht mittig erfolgen muss. Es wäre auch denkbar, eine vollkommen andere Technik der Linienvereinigung vorzusehen. Beispielsweise könnten die Verpackungsschalen 3 mittels eines senkrecht zu der Förderrichtung F beweglichen Pushers auf der von der ersten Fördereinrichtung 11 und der dritten Fördereinrichtung 15 gebildeten gemeinsamen Förderfläche 21 seitlich verschoben werden.

## Patentansprüche

1. Schalenverschließmaschine (1) mit einer Förderanordnung (9) zum Fördern von Verpackungsschalen (3) entlang einer Förderrichtung (F), wobei die Förderanordnung (9) Folgendes umfasst:
eine erste Fördereinrichtung (11) zum Fördern einer ersten Linie von Verpackungsschalen (3) entlang der Förderrichtung (F);
eine seitlich neben der ersten Fördereinrichtung (11) verlaufende zweite Fördereinrichtung (13) zum Fördern einer zweiten Linie von Verpackungsschalen (3) entlang der Förderrichtung (F);
eine zwischen der ersten Fördereinrichtung (11) und der zweiten Fördereinrichtung (13) angeordnete Mittenführung (16), welche entlang der Förderrichtung (F) verläuft,
**gekennzeichnet durch**
eine dritte Fördereinrichtung (15) zum Fördern von Verpackungsschalen (3) entlang der Förderrichtung (F), wobei sich die dritte Fördereinrichtung (15) bezüglich der Förderrichtung (F) an die zweite Fördereinrichtung (13) anschließend seitlich neben der ersten Fördereinrichtung (11) erstreckt,
wobei die dritte Fördereinrichtung (15) seitlich näher an die erste Fördereinrichtung (11) heranreicht als die zweite Fördereinrichtung (13).

2. Schalenverschließmaschine nach Anspruch 1, wobei die dritte Fördereinrichtung (15) eine größere Breite aufweist als die zweite Fördereinrichtung (13).

3. Schalenverschließmaschine nach einem der vorangehenden Ansprüche, wobei sich die dritte Fördereinrichtung (15) bezüglich der Förderrichtung (F) an die Mittenführung (16) anschließt.

4. Schalenverschließmaschine nach einem der vorangehenden Ansprüche, wobei die Förderanordnung (9) zudem eine erste Antriebsanordnung (23) umfasst, welche dazu konfiguriert ist, die erste Fördereinrichtung (11) und die dritte Fördereinrichtung (15) gemeinsam anzutreiben.

5. Schalenverschließmaschine nach einem der vorangehenden Ansprüche, wobei die Förderanordnung (9) zudem eine zweite Antriebsanordnung (25) umfasst, welche dazu konfiguriert ist, die zweite Fördereinrichtung (13) getrennt von der ersten Fördereinrichtung (11) und der dritten Fördereinrichtung (15) anzutreiben.

6. Schalenverschließmaschine nach Anspruch 5, welche zudem eine Steuereinrichtung (27) umfasst, welche dazu konfiguriert ist, die zweite Antriebsanordnung (25) derart anzusteuern, dass die zweite Fördereinrichtung (13) während eines Teils einer Laufzeit der ersten Fördereinrichtung (11) und der dritten Fördereinrichtung (15) fördert und während eines Teils der Laufzeit der ersten Fördereinrichtung (11) und der dritten Fördereinrichtung (15) stillsteht.

7. Schalenverschließmaschine nach einem der vorangehenden Ansprüche, welche zudem einen Linienvereiniger (19) aufweist, welcher dazu konfiguriert ist, die erste Linie von Verpackungsschalen (3) und die zweite Linie von Verpackungsschalen (3) der Mittenführung (16) bezüglich der Förderrichtung (F) nachgeordnet zu einer gemeinsamen Linie von Verpackungsschalen (3) zu vereinigen.

8. Verfahren zum Fördern von Verpackungsschalen (3) entlang einer Förderrichtung (F) mittels einer Förderanordnung (9) einer Schalenverschließmaschine (1), wobei das Verfahren Folgendes umfasst:
Fördern einer ersten Linie von Verpackungsschalen (3) entlang der Förderrichtung (F) mit einer ersten Fördereinrichtung (11);
Fördern einer zweiten Linie von Verpackungsschalen (3) entlang der Förderrichtung (F) mit einer zweiten Fördereinrichtung (13), welche seitlich neben der ersten Fördereinrichtung (11) verläuft und durch eine zwischen der ersten Fördereinrichtung (11) und der zweiten Fördereinrichtung (13) entlang der Förderrichtung (F) verlaufende Mittenführung (16) von der ersten Fördereinrichtung (11) getrennt ist,
**gekennzeichnet durch**
Antreiben einer dritten Fördereinrichtung (15), welche sich bezüglich der Förderrichtung (F) an die zweite Fördereinrichtung (13) anschließt und sich seitlich neben der ersten Fördereinrichtung (11) entlang der Förderrichtung (F) erstreckt,
wobei die dritte Fördereinrichtung (15) seitlich näher an die erste Fördereinrichtung (11) heranreicht als die zweite Fördereinrichtung (13).

9. Verfahren nach Anspruch 8, welches zudem das gemeinsame Antreiben der ersten Fördereinrichtung (11) und der dritten Fördereinrichtung (15) mit einer gemeinsamen ersten Antriebsanordnung (23) umfasst.

10. Verfahren nach Anspruch 8 oder 9, welches zudem das Antreiben der zweiten Fördereinrichtung (13) getrennt von der ersten Fördereinrichtung (11) und der dritten Fördereinrichtung (15) mit einer zweiten Antriebsanordnung (25) umfasst.

11. Verfahren nach Anspruch 10, wobei die zweite Antriebsanordnung (25) während eines Teils einer Laufzeit der ersten Fördereinrichtung (11) und der dritten Fördereinrichtung (15) zum Antreiben der zweiten Fördereinrichtung (13) betrieben wird und während eines Teils der Laufzeit der ersten Fördereinrichtung (11) und der dritten Fördereinrichtung (15) stillsteht.

12. Verfahren nach einem der Ansprüche 8 bis 11, welche zudem das Vereinigen der ersten Linie von Verpackungsschalen (3) und der zweiten Linie von Verpackungsschalen (3) umfasst, insbesondere der Mittenführung (16) bezüglich der Förderrichtung (F) nachgeordnet.

13. Verfahren nach Anspruch 12, wobei zum Vereinigen der ersten Linie von Verpackungsschalen (3) und der zweiten Linie von Verpackungsschalen (3) Verpackungsschalen (3) der ersten Linie von Verpackungsschalen (3) und/oder Verpackungsschalen (3) der zweiten Linie von Verpackungsschalen (3) in eine Richtung senkrecht zu der Förderrichtung (F) verschoben werden.

14. Verfahren nach Anspruch 12 oder 13, wobei die Verpackungsschalen (3) nach dem Vereinigen der ersten Linie von Verpackungsschalen (3) und der zweiten Linie von Verpackungsschalen (3) zumindest im Wesentlichen mittig auf einer von der ersten Fördereinrichtung (11) und der dritten Fördereinrichtung (15) gebildeten gemeinsamen Förderfläche (21) gefördert werden.

## Claims

1. Tray sealer (1) with a conveyor arrangement (9) for conveying packaging trays (3) along a conveying direction (F), said conveyor arrangement (9) comprising the following:
a first conveyor device (11) for conveying a first line of packaging trays (3) along said conveying direction (F);
a second conveyor device (13) running laterally alongside said first conveyor device (11) for conveying a second line of packaging trays (3) along said conveying direction (F);
a center guide (16) which is arranged between said first conveyor device (11) and said second conveyor device (13) and extends along said conveying direction (F),
**characterized by**
a third conveyor device (15) for conveying packaging trays (3) along said conveying direction (F), wherein said third conveyor device (15) extends adjoining said second conveyor device (13) in terms of said conveying direction (F) laterally alongside said first conveyor device (11), wherein said third conveyor device (15) reaches laterally closer to said first conveyor device (11) than said second conveyor device (13).

2. Tray sealer according to claim 1, where said third conveyor device (15) has a greater width than said second conveyor device (13).

3. Tray sealer according to one of the preceding claims, where said third conveyor device (15) in terms of said conveying direction (F) adjoins said center guide (16).

4. Tray sealer according to one of the preceding claims, where said conveyor arrangement (9) further comprises a first drive arrangement (23) which is configured to jointly drive said first conveyor device (11) and said third conveyor device (15).

5. Tray sealer according to one of the preceding claims, where said conveyor arrangement (9) further comprises a second drive arrangement (25) which is configured to drive said second conveyor device (13) separately from said first conveyor device (11) and said third conveyor device (15).

6. Tray sealer according to claim 5, further comprising a control device (27) which is configured to actuate said second drive arrangement (25) in such a way that said second conveyor device (13) is conveying for part of the running time of said first conveyor device (11) and said third conveyor device (15) and is at a standstill for part of the running time of said first conveyor device (11) and said third conveyor device (15).

7. Tray sealer according to one of the preceding claims, further comprising a line converger (19) which is configured to converge the first line of packing trays (3) and the second line of packing trays (3) to form a common line of packing trays (3) in terms of said conveying direction (F) downstream of said center guide (16).

8. Method for conveying packaging trays (3) along a conveying direction (F) by way of a conveyor device (9) of a tray sealer (1), said method comprising the following:
conveying a first line of packaging trays (3) along said conveying direction (F) with a first conveyor device (11);
conveying a second line of packaging trays (3) along said conveying direction (F) with a second conveyor device (13) which runs laterally alongside said first conveyor device (11) and is separated from said first conveyor device (11) by a center guide (16) extending along said conveying direction (F) between said first conveyor device (11) and said second conveyor device (13),
**characterized by**
driving a third conveyor device (15) which in terms of said conveying direction (F) adjoins said second conveyor device (13) and extends laterally alongside said first conveyor device (11) along said conveying direction (F), wherein said third conveyor device (15) reaches laterally closer to said first conveyor device (11) than said second conveyor device (13).

9. Method according to claim 8, further comprising jointly driving said first conveyor device (11) and said third conveyor device (15) with a common first drive arrangement (23).

10. Method according to claim 8 or 9, further comprising driving said second conveyor device (13) separately from said first conveyor device (11) and said third conveyor device (15) with a second drive arrangement (25).

11. Method according to claim 10, where said second drive arrangement (25) is operated for part of a running time of said first conveyor device (11) and said third conveyor device (15) for driving said second conveyor device (13) and is at a standstill for part of the running time of said first conveyor device (11) and said third conveyor device (15).

12. Method according to one of the claims 8 to 11, further comprising converging said first line of packaging trays (3) and said second line of packaging trays (3), in particular in terms of said conveying direction (F) downstream of said center guide (16).

13. Method according to claim 12, where, for converging said first line of packaging trays (3) and said second line of packaging trays (3), packaging trays (3) of said first line of packaging trays (3) and/or packaging trays of said second line of packaging trays (3) are pushed in a direction perpendicular to said conveying direction (F).

14. Method according to claim 12 or 13, said packaging trays (3), once said first line of packaging trays (3) and said second line of packaging trays (3) have been converged, are conveyed at least substantially centrally on a conveying surface (21) formed by said first conveyor device (11) and said third conveyor device (15).

## Revendications

1. Operculeuse de barquettes (1) avec un agencement de convoyage (9) pour convoyer des barquettes d'emballage (3) selon une direction de convoyage (F), dans laquelle l'agencement de convoyage (9) comprend :
un premier dispositif de convoyage (11) pour convoyer une première ligne de barquettes d'emballage (3) dans la direction de convoyage (F) ;
un deuxième dispositif de convoyage (13) s'étendant latéralement à côté du premier dispositif de convoyage (11) pour convoyer une deuxième ligne de barquettes d'emballage (3) dans la direction de convoyage (F) ;
un guide central (16) agencé entre le premier dispositif de convoyage (11) et le deuxième dispositif de convoyage (13) et qui s'étend dans la direction de convoyage (F),
**caractérisée par**
un troisième dispositif de convoyage (15) pour convoyer des barquettes d'emballage (3) dans la direction de convoyage (F), dans laquelle le troisième dispositif de convoyage (15) s'étend latéralement à côté du premier dispositif de convoyage (11) en prolongeant le deuxième dispositif de convoyage (13) selon la direction de convoyage (F),
dans laquelle le troisième dispositif de convoyage (15) s'étend latéralement plus près du premier dispositif de convoyage (11) que le deuxième dispositif de convoyage (13).

2. Operculeuse de barquettes selon la revendication 1, dans laquelle le troisième dispositif de convoyage (15) présente une largeur supérieure à celle du deuxième dispositif de convoyage (13).

3. Operculeuse de barquettes selon l'une des revendications précédentes, dans laquelle le troisième dispositif de convoyage (15) prolonge le guide central (16) selon la direction de convoyage (F).

4. Operculeuse de barquettes selon l'une des revendications précédentes, dans laquelle l'agencement de convoyage (9) comprend en outre un premier agencement d'entraînement (23) configuré pour entraîner conjointement le premier dispositif de convoyage (11) et le troisième dispositif de convoyage (15).

5. Operculeuse de barquettes selon l'une des revendications précédentes, dans laquelle l'agencement de convoyage (9) comprend en outre un deuxième agencement d'entraînement (25) configuré pour entraîner le deuxième dispositif de convoyage (13) séparément du premier dispositif de convoyage (11) et du troisième dispositif de convoyage (15).

6. Operculeuse de barquettes selon la revendication 5, comprenant en outre un dispositif de commande (27) configuré pour commander le deuxième agencement d'entraînement (25) de telle manière que le deuxième dispositif de convoyage (13) fonctionne pendant une partie d'une durée de fonctionnement du premier dispositif de convoyage (11) et du troisième dispositif de convoyage (15) et s'arrête pendant une partie de la durée de fonctionnement du premier dispositif de convoyage (11) et du troisième dispositif de convoyage (15).

7. Operculeuse de barquettes selon l'une des revendications précédentes, comportant en outre un combineur de lignes (19) configuré pour combiner la première ligne de barquettes d'emballage (3) et la deuxième ligne de barquettes d'emballage (3) en aval du guide central (16) selon la direction de convoyage (F) en une ligne commune de barquettes d'emballage (3).

8. Procédé pour convoyer des barquettes d'emballage (3) selon une direction de convoyage (F) au moyen d'un agencement de convoyage (9) d'une operculeuse de barquettes (1), dans lequel le procédé comprend :
le convoyage d'une première ligne de barquettes d'emballage (3) dans la direction de convoyage (F) avec un premier dispositif de convoyage (11) ;
le convoyage d'une deuxième ligne de barquettes d'emballage (3) dans la direction de convoyage (F) avec un deuxième dispositif de convoyage (13) qui s'étend latéralement à côté du premier dispositif de convoyage (11) et est séparé du premier dispositif de convoyage (11) par un guide central (16) s'étendant dans la direction de convoyage (F) entre le premier dispositif de convoyage (11) et le deuxième dispositif de convoyage (13),
**caractérisé par**
l'entraînement d'un troisième dispositif de convoyage (15), qui prolonge le deuxième dispositif de convoyage (13) selon la direction de convoyage (F) et s'étend latéralement à côté du premier dispositif de convoyage (11) dans la direction de convoyage (F),
dans lequel le troisième dispositif de convoyage (15) s'étend latéralement plus près du premier dispositif de convoyage (11) que le deuxième dispositif de convoyage (13).

9. Procédé selon la revendication 8, comprenant en outre l'entraînement conjoint du premier dispositif de convoyage (11) et du troisième dispositif de convoyage (15) avec un premier agencement d'entraînement commun (23).

10. Procédé selon la revendication 8 ou 9, comprenant en outre l'entraînement du deuxième dispositif de convoyage (13) séparément du premier dispositif de convoyage (11) et du troisième dispositif de convoyage (15) avec un deuxième agencement d'entraînement (25).

11. Procédé selon la revendication 10, dans lequel le deuxième agencement d'entraînement (25) est actionné pendant une partie d'une durée de fonctionnement du premier dispositif de convoyage (11) et du troisième dispositif de convoyage (15) pour entraîner le deuxième dispositif de convoyage (13), et est arrêté pendant une partie de la durée de fonctionnement du premier dispositif de convoyage (11) et du troisième dispositif de convoyage (15).

12. Procédé selon l'une des revendications 8 à 11, comprenant en outre la combinaison de la première ligne de barquettes d'emballage (3) et de la deuxième ligne de barquettes d'emballage (3), en particulier en aval du guide central (16) selon la direction de convoyage (F).

13. Procédé selon la revendication 12, dans lequel, pour combiner la première ligne de barquettes d'emballage (3) et la deuxième ligne de barquettes d'emballage (3), les barquettes d'emballage (3) de la première ligne de barquettes d'emballage (3) et/ou les barquettes d'emballage (3) de la deuxième ligne de barquettes d'emballage (3) sont décalées dans une direction perpendiculaire à la direction de convoyage (F).

14. Procédé selon la revendication 12 ou 13, dans lequel les barquettes d'emballage (3), après la combinaison de la première ligne de barquettes d'emballage (3) et de la deuxième ligne de barquettes d'emballage (3), sont convoyées au moins sensiblement au centre sur une surface de convoyage commune (21) formée par le premier dispositif de convoyage (11) et le troisième dispositif de convoyage (15).
